# EUROPEAN PATENT APPLICATION

(11) **EP 4 245 528 A1**
(43) Date of publication of application: **20.09.2023**
(21) Application number: 21891896.9
(22) Date of filing: 10.11.2021
(51) Int. Cl.: B32B 27/00, B32B 27/40, C09J 201/00, C09J 7/25

(54) **OPTICALLY TRANSPARENT ADHESIVE SHEET, LAYERED BODY, AND BONDED STRUCTURE**

(30) Priority: 11.11.2020 JP 2020188304
(71) Applicant: Bando Chemical Industries, Ltd., Kobe-shi, Hyogo 650-0047 (JP)
(72) Inventor: TERAOKA, Mitsuru, Kobe-shi, Hyogo 650-0047 (JP); TAKAHAMA, Shun, Kobe-shi, Hyogo 650-0047 (JP); SUZUKI, Hisataka, Kobe-shi, Hyogo 650-0047 (JP)
(74) Representative: Müller-Boré & Partner Patentanwälte PartG mbB
(86) International application number: PCT/JP2021/041321
(87) International publication number: WO 2022/102650

(57) **Abstract**

The present invention provides an optically clear adhesive sheet that prevents delay bubble generation and has a large thickness, a high adhesive strength to an adherend, a high capability to conform to the adherend, and excellent weather resistance; a laminate including the optically clear adhesive sheet; and a bonded structure including the optically clear adhesive sheet. The optically clear adhesive sheet includes, in the following order: a first surface-adhesive layer; an intermediate polyurethane layer; and a second surface-adhesive layer, the intermediate polyurethane layer containing a hindered amine-based light stabilizer, the optically clear adhesive sheet having a loss tangent at 85°C of 0.25 or more and 0.6 or less, the intermediate polyurethane layer having a thickness of 100 µm or greater and 2000 µm or smaller.

## Description

### TECHNICAL FIELD

The present invention relates to an optically clear adhesive sheet, a laminate including the optically clear adhesive sheet, and a bonded structure including the optically clear adhesive sheet.

### BACKGROUND ART

Optically clear adhesive (OCA) sheets are transparent adhesive sheets used to bond optical members to each other. An optically clear adhesive sheet is used, for example, in a display device to bond a display panel such as a liquid crystal module to a cover panel on the outermost surface of the display device. The optically clear adhesive sheet fills the space between the display panel and the cover panel, thus improving the viewability of the display panel screen.

The following patent literatures, for example, disclose prior arts in the related fields of optically clear adhesive sheets. Patent Literature 1 discloses an optically clear adhesive sheet that has excellent flexibility and prevents delay bubbles in high temperature and high humidity environments. The optically clear adhesive sheet sequentially includes a first surface-adhesive layer, an intermediate adhesive layer, and a second surface-adhesive layer in this order. The first surface-adhesive layer and the second surface-adhesive layer each have a higher storage elastic modulus at 85°C than the intermediate adhesive layer. The first surface-adhesive layer and the second surface-adhesive layer each have a storage elastic modulus at 85°C of 3.0 × 10⁴ Pa or higher and 30.0 × 10⁴ Pa or lower. The intermediate adhesive layer has a storage elastic modulus at 85°C of 1.0 × 10⁴ Pa or higher and 15.0 × 10⁴ Pa or lower. The intermediate adhesive layer contains polyurethane.

Patent Literature 2 discloses an optically clear adhesive sheet comprising a cured product of a thermosetting polyurethane composition. The thermosetting polyurethane composition contains a polyol component, a polyisocyanate component, a tackifier, and a hindered amine-based stabilizer. The α ratio (the number of moles of OH groups derived from polyol component/the number of moles of NCO groups derived from polyisocyanate component) of the thermosetting polyurethane composition is 1 or higher.

### CITATION LIST

### - Patent Literature

Patent Literature 1: WO 2019/026577
Patent Literature 2: JP 2016-166280 A

### SUMMARY OF INVENTION

### - Technical Problem

An optically clear adhesive sheet used to bond a display panel to a touchscreen body is required to have a high adhesive strength, a sufficient thickness to cover an uneven surface on which a bezel is present, and sufficient flexibility to change its shape by conforming to the uneven surface. When a bonded structure including a display panel and a touchscreen body bonded together by an optically clear adhesive sheet is left in a high temperature and high humidity environment with a temperature of 85°C and a humidity of 85%, for example, delay bubbles may be generated to cause peeling of the optically clear adhesive sheet from the adherend at the adhesive interface therebetween. Air bubbles that are not present immediately after the optically clear adhesive sheet is bonded to the adherend but are generated later at the adhesive interface between the optically clear adhesive sheet and the adherend are called delay bubbles. Delay bubbles are seemingly generated by a phenomenon in which the pressure of water vapor from the adherend such as a resin panel causes a weakly bonded surface to peel off.

The present inventor made studies on preventing delay bubble generation and focused on an optically clear adhesive sheet including a first surface-adhesive layer, an intermediate layer, and a second surface-adhesive layer. The studies revealed that while use of a polyurethane layer as the intermediate layer can make the optically clear adhesive sheet thick, exposing the optically clear adhesive sheet to ultraviolet rays in a high temperature environment (e.g., 83°C) melts the portion exposed to the outside air to cause deformation of the sheet. Bonded structures including optically clear adhesive sheets are sometimes used outdoors or for in-vehicle applications, and thus require excellent weather resistance.

The present invention has been made in view of the above current state of the art, and aims to provide an optically clear adhesive sheet that prevents delay bubble generation and has a large thickness, a high adhesive strength to an adherend, a high capability to conform to the adherend, and excellent weather resistance; a laminate including the optically clear adhesive sheet; and a bonded structure including the optically clear adhesive sheet.

### - Solution to Problem

The inventor has examined a method of producing a thick optically clear adhesive sheet having a capability to conform to the adherend and an effect of preventing delay bubbles. As a result, the inventor found that adjusting the loss tangent at 85°C to within the predetermined range enables the sheet to have both the capability to conform to the adherend and the effect of preventing delay bubbles. The inventor also found that when a polyurethane layer is used as the intermediate layer, adding a hindered amine-based light stabilizer to the polyurethane layer enables an optically clear adhesive sheet having an excellent adhesive strength and less likely to melt in high temperature and ultraviolet irradiation environments without deteriorating the optical properties (e.g., transparency). Thereby, the present invention was completed.

The optically clear adhesive sheet of the present invention includes, in the following order: a first surface-adhesive layer; an intermediate polyurethane layer; and a second surface-adhesive layer, the intermediate polyurethane layer containing a hindered amine-based light stabilizer, the optically clear adhesive sheet having a loss tangent at 85°C of 0.25 or more and 0.6 or less, the intermediate polyurethane layer having a thickness of 100 µm or greater and 2000 µm or smaller.

Preferably, the intermediate polyurethane layer is a cured product of a thermosetting polyurethane composition that contains a polyol component and a polyisocyanate component.

Preferably, the hindered amine-based light stabilizer is contained in an amount of 0.1 parts by weight or more and 1 part by weight or less relative to 100 parts by weight of the polyol component.

Preferably, an α ratio (the number of moles of OH groups derived from polyol component/the number of moles of NCO groups derived from polyisocyanate component) of the intermediate polyurethane layer is 1.0 or higher and 1.8 or lower.

Preferably, the polyisocyanate component includes a hydrophilic polyisocyanate and a hydrophobic polyisocyanate.

A laminate of the present invention includes: the optically clear adhesive sheet of the present invention; a first release liner covering one surface of the optically clear adhesive sheet; and a second release liner covering the other surface of the optically clear adhesive sheet.

A bonded structure of the present invention includes: a first adherend; a second adherend; and the optically clear adhesive sheet of the present invention bonding the first adherend and the second adherend to each other.

### - Advantageous Effects of Invention

The present invention can provide an optically clear adhesive sheet that prevents delay bubble generation and has a large thickness, a high adhesive strength to an adherend, a high capability to conform to the adherend, and excellent weather resistance; a laminate including the optically clear adhesive sheet; and a bonded structure including the optically clear adhesive sheet.

### BRIEF DESCRIPTION OF DRAWINGS

FIG. 1 is a schematic cross-sectional view of an exemplary optically clear adhesive sheet of the present invention.
FIG. 2 is a schematic cross-sectional view of an exemplary laminate of the present invention.
FIG. 3 is a schematic cross-sectional view of an exemplary touchscreen display device including the optically clear adhesive sheet of the present invention.
FIG. 4A is a schematic view showing an evaluation method of adhesive strength.
FIG. 4B is another schematic view showing the evaluation method of adhesive strength.

### DESCRIPTION OF EMBODIMENTS

### [Optically clear adhesive sheet]

The optically clear adhesive sheet of the present invention includes, in the following order: a first surface-adhesive layer; an intermediate polyurethane layer; and a second surface-adhesive layer, the intermediate polyurethane layer containing a hindered amine-based light stabilizer, the optically clear adhesive sheet having a loss tangent at 85°C of 0.25 or more and 0.6 or less, the intermediate polyurethane layer having a thickness of 100 µm or greater and 2000 µm or smaller.

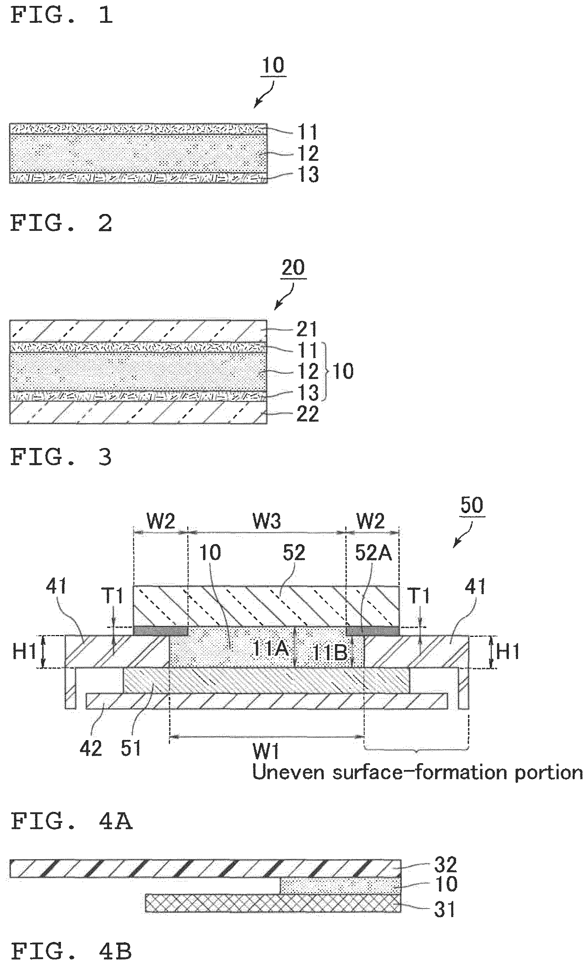

FIG. 1 is a schematic cross-sectional view of an exemplary optically clear adhesive sheet of the present invention. As shown in FIG. 1, an optically clear adhesive sheet 10 of the present invention includes a first surface-adhesive layer 11, an intermediate polyurethane layer 12, and a second surface-adhesive layer 13 in this order. The intermediate polyurethane layer 12 is preferably thicker than each of the first surface-adhesive layer 11 and the second surface-adhesive layer 13. While a sufficient flexibility and a sufficient conforming capability of the optically clear adhesive sheet 10 are achieved using the intermediate polyurethane layer 12, delay bubble generation can be prevented by placing the first and second surface-adhesive layers on the surfaces of the intermediate polyurethane layer 12.

### <Surface-adhesive layer>

The first surface-adhesive layer 11 and the second surface-adhesive layer 13 both define the outermost surfaces of the optically clear adhesive sheet 10. The first surface-adhesive layer 11 and the second surface-adhesive layer 13 each preferably contain an acrylic resin. The acrylic resin is a cured product of an acrylic resin composition. Examples of the acrylic resin composition include a composition containing a crosslinking agent and a (meth)acrylic ester-based polymer or a copolymer of a (meth)acrylic acid alkyl ester and a monomer (hereinafter, also referred to as a (meth)acrylic copolymer).

Examples of the (meth)acrylic copolymer include a copolymer of a (meth)acrylic acid alkyl ester and a carboxyl-group-containing monomer.

Examples of the (meth)acrylic acid alkyl ester include a (meth)acrylic acid alkyl ester containing a C1-C18 alkyl group (CH₂=CR¹-COOR², wherein R¹ represents a hydrogen atom or a methyl group and R² represents a C1-C18 alkyl group). The carbon number of the alkyl group is more preferably 4 to 12.

Examples of the (meth)acrylic acid alkyl ester containing a C1-C18 alkyl group include methyl (meth)acrylate, ethyl (meth)acrylate, propyl (meth)acrylate, isopropyl (meth)acrylate, n-butyl (meth)acrylate, isobutyl (meth)acrylate, tert-butyl (meth)acrylate, pentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, decyl (meth)acrylate, isodecyl (meth)acrylate, undeca (meth)acrylate, lauryl (meth)acrylate, stearyl (meth)acrylate, and isostearyl (meth)acrylate. These may be used alone or in combination of two or more.

Examples of the carboxyl-group-containing monomer include carboxyl-group-containing (meth)acrylates such as β-carboxy ethyl (meth)acrylate, 5-carboxy pentyl (meth)acrylate, mono(meth)acryloyl oxyethyl succinate, and ω-carboxy polycaprolactone mono(meth)acrylate; and acrylic acid, methacrylic acid, itaconic acid, crotonic acid, fumaric acid, and maleic acid. These may be used alone or in combination of two or more.

The crosslinking agent may be any component that can cause a crosslinking reaction with a crosslinkable functional group derived from a crosslinkable-functional-group-containing monomer contained in the (meth)acrylic copolymer. Specific examples thereof include an isocyanate compound, a metal chelate compound, and an epoxy compound. These crosslinking agents may be used alone or in combination of two or more.

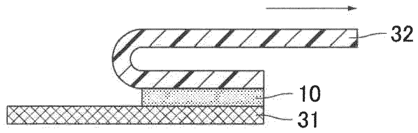

The first surface-adhesive layer 11 and the second surface-adhesive layer 13 each have an adhesive strength to glass at a normal temperature (23°C) of preferably 10 N/25 mm or more. The upper limit of the adhesive strength at a normal temperature is not limited but is 40 N/25 mm, for example. The adhesive strength at a normal temperature herein means the adhesive strength measured in a 180° peel test. The 180° peel test is performed in conformity with JIS Z2037. The 180° peel test is described below with reference to FIG. 4.

FIGs. 4 each are a schematic view showing an evaluation method of adhesive strength. An optically clear adhesive sheet 10 cut into a size of 40 mm (length) × 25 mm (width) is used as a sample. One side of this sample is bonded to a microscope slide 31 made of glass (i.e., glass slide) having a size of 75 mm (length) × 25 mm (width). The members are retained in this state under a pressure of 0.4 MPa for 30 minutes, so that the optically clear adhesive sheet 10 and the glass slide 31 are bonded to each other. Then, as shown in FIG. 4A, a PET sheet 32 having a size of 150 mm (length) × 30 mm (width) is bonded to the surface of the optically clear adhesive sheet 10 on the side opposite to the glass slide 31 such that the PET sheet 32 has on each side an excess width of approximately 5 mm where it is not in contact with the optically clear adhesive sheet 10. The sample is then left to stand at a prescribed temperature for a prescribed period of time. Thereafter, the PET sheet 32 is pulled in a 180° direction as shown in FIG. 4B to separate the optically clear adhesive sheet 10 from the glass slide 31 at the interface therebetween, so that the adhesive strength of the optically clear adhesive sheet 10 to the glass slide 31 is measured. Examples of the PET sheet include a 125-µm-thick PET sheet ("Melinex^{®} S" available from Teijin DuPont Films).

Preferably, the thickness of each of the first surface-adhesive layer 11 and the second surface-adhesive layer 13 is 10 to 100 µm. With a thickness of smaller than 10 µm, a surface-adhesive layer may exhibit adhesive strength insufficient to prevent delay bubbles. With a thickness of greater than 100 µm, a surface-adhesive layer may not have sufficient flexibility (capability to conform to an uneven surface) to conform to an uneven surface of an adherend to which the optically clear adhesive sheet is to be bonded. In addition, when the optically clear adhesive sheet is used for bonding substrates that show different elasticities under environmental changes, such as a glass substrate and a resin substrate, the optically clear adhesive sheet may fail to follow the size difference between the substrates under the environmental changes to peel off. For better prevention of delay bubble generation, the thickness of each of the first surface-adhesive layer 11 and the second surface-adhesive layer 13 is more preferably 20 µm or greater, still more preferably 25 µm or greater. In terms of flexibility, the upper limit of the thickness of each of the first surface-adhesive layer 11 and the second surface-adhesive layer 13 is more preferably 80 µm.

### <Intermediate polyurethane layer>

The intermediate polyurethane layer 12 contains polyurethane. With the intermediate polyurethane layer 12 containing polyurethane, the resulting optically clear adhesive sheet 10 can be excellent in transparency and conforming capability. Polyurethane, which is flexible, makes the optically clear adhesive sheet 10 of the present invention elongates well and very unlikely to be torn under tensile stress. The optically clear adhesive sheet 10 can therefore be peeled off without adhesive residue. Furthermore, since polyurethane has a high permittivity, the optically clear adhesive sheet 10 has a high capacitance and is therefore suitable for bonding of a capacitive touchscreen.

The intermediate polyurethane layer 12 contains a hindered amine-based light stabilizer. When an optically clear adhesive sheet is exposed to an ultraviolet irradiation environment, e.g., a metal halide lamp irradiation environment, the photoactivated oxygen molecules and hydroxy radicals, for example, react with the ether linkage site of polyurethane to melt the intermediate polyurethane layer. In addition, the radicals, for example, are easily generated in a high temperature environment, meaning that the intermediate polyurethane layer is apt to melt. A hindered amine-based light stabilizer can capture the radicals, and thus can prevent melting of the intermediate polyurethane layer even when the above optically clear adhesive sheet is left in a high temperature and ultraviolet irradiation environment. The hindered amine-based light stabilizer can also prevent melting of the intermediate polyurethane layer without deteriorating the optical properties and adhesive strength of the optically clear adhesive sheet.

Non-limiting examples of the hindered amine-based light stabilizer include bis-(2,2,6,6-tetramethyl-4-piperidyl) sebacate, [dimethyl succinate-1-(2-hydroxyethyl)-4-hydroxy-2,2,6,6-tetramethylpiperidine] condensate, 1,2,2,6,6-pentamethyl-4-piperidyl-tridecyl-1,2,3,4-butane tetracarboxylate, 1,2,2,6,6-pentamethyl-4-piperidinol, and an ester of 3,9-bis(2-hydroxy-1,1-dimethylethyl)-2,4,8,10-tetraspiro[5,5]undecane and butane tetracarboxylic acid. These may be used alone or in combination of two or more.

Specific examples of the hindered amine-based light stabilizer include ADK STAB LA-81, ADK STAB LA-63P, and ADK STAB LA-72 available from ADEKA Corporation.

ADK STAB LA-81 includes a compound represented by the following chemical formula (1).

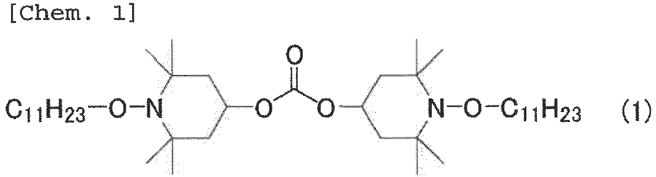

ADK STAB LA-63P includes a compound represented by the following chemical formula (2). 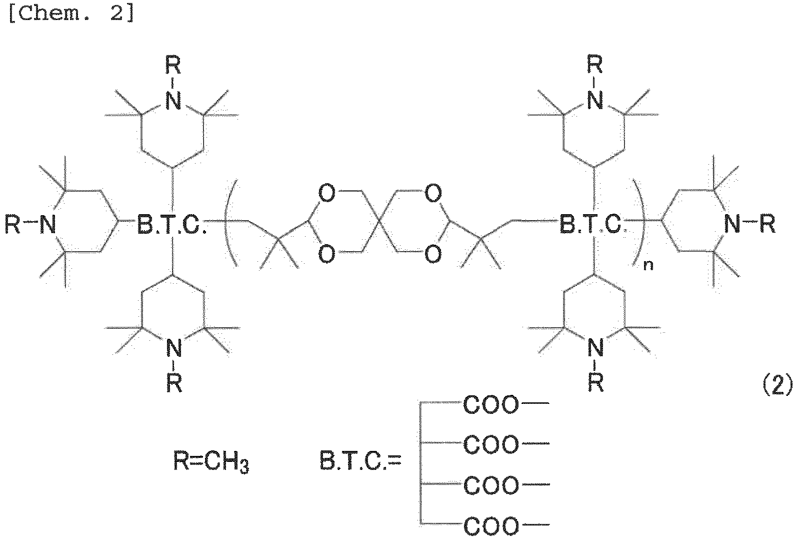 In the chemical formula (2), n is a natural number.

ADK STAB LA-72 includes a compound represented by the following chemical formula (3).

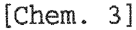

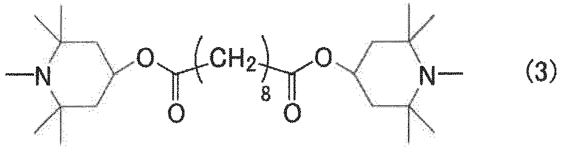

Preferably, the hindered amine-based light stabilizer is contained in an amount of 0.1 parts by weight or more and 1 part by weight or less relative to 100 parts by weight of the polyol component. With the hindered amine-based light stabilizer contained in an amount of less than 0.1 parts by weight, deformation (melting) of the optically clear adhesive sheet under a high temperature and ultraviolet irradiation environment may not be sufficiently prevented. With the hindered amine-based light stabilizer in an amount of more than 1 part by weight, the light stabilizer may bleed from the intermediate polyurethane layer 12, resulting in reduced adhesion between the first and second surface-adhesive layers.

Preferably, the intermediate polyurethane layer 12 is a cured product of a thermosetting polyurethane composition containing a polyol component and a polyisocyanate component. Such heat-cured polyurethane can give a film without a solvent, thus enabling a thick intermediate adhesive layer 12. Also, the intermediate polyurethane layer 12 containing heat-cured polyurethane can give an optically clear adhesive sheet that is excellent in flexibility and transparency even when formed thick and that is highly reliable as being less susceptible to whitening even in high temperature and high humidity environments. The heat-cured polyurethane is obtainable by reacting the polyol component and the polyisocyanate component, for example, and preferably has a structure represented by the following formula (A).

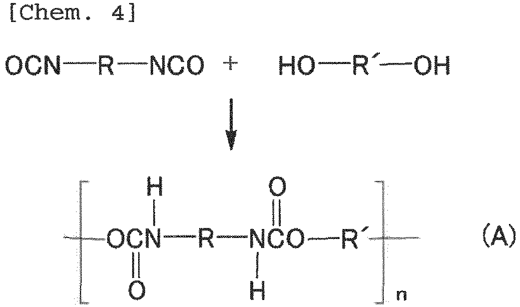

In the formula (A), R represents a non-NCO-group moiety of a polyisocyanate component, R' represents a non-OH-group moiety of a polyol component, and n represents the number of repeating units.

The heat-cured polyurethane is preferably not an acrylic-modified one, and preferably contains no moiety derived from, for example, an acrylic ester or a methacrylic ester in the main chain. An acrylic-modified heat-cured polyurethane is hydrophobic and is thus likely to cause moisture condensation in a high temperature and high humidity environment. The moisture condensation may cause defects such as whitening and foaming to damage the optical characteristics. A non-acrylic-modified heat-cured polyurethane thus can prevent deterioration of the optical characteristics due to defects such as whitening and foaming in high temperature and high humidity environments. The heat-cured polyurethane preferably contains a total of 80 mol% or more of monomer units derived from a polyol component and monomer units derived from a polyisocyanate component relative to all the monomer units constituting the heat-cured polyurethane.

Both the polyol component and the polyisocyanate component can be components that are liquids at normal temperature (23°C), so that heat-cured polyurethane can be obtained without a solvent. Other components such as a tackifier can be added to the polyol component or the polyisocyanate component, and are preferably added to the polyol component. Production of the intermediate polyurethane layer 12 requires no removal of a solvent, and thus enables formation of a thick sheet with an even surface. Also, the intermediate polyurethane layer 12 can keep its optical characteristics even in the case of having a large thickness, and thus can sufficiently prevent coloring and foaming (generation of air bubbles at the interface with the adherend). Since the intermediate polyurethane layer 12 has a large thickness while being flexible, the intermediate polyurethane layer 12 is excellent in shock resistance. The optically clear adhesive sheet including the intermediate polyurethane layer 12 can be used to bond a transparent member having a transparent conductive film on its outer surface to a cover panel. In the case of using an additional member, the optically clear adhesive sheet can also be used to bond a display panel or a transparent member having a transparent conductive film on its outer surface to the additional member. In the case of using the optically clear adhesive sheet including the intermediate polyurethane layer 12 to bond a display panel to a transparent member (touchscreen) having a transparent conductive film on its outer surface, the optically clear adhesive sheet can conform to an uneven surface formed due to a bezel placed on the outer edge of the display panel.

Examples of the polyol component include polyolefin polyols, polyether polyols, polycaprolactone polyols, polycarbonate polyols, and polyester polyols. These may be used alone or in combination of two or more. In particular, polyolefin polyols are preferred. Specific examples of the polyolefin polyols include EPOL (available from Idemitsu Kosan Co., Ltd.).

The polyol component preferably contains 50% by weight or more of a polyol component having an olefin skeleton, and more preferably consists only of a polyol component having an olefin skeleton.

The polyolefin polyols preferably have an olefin skeleton, meaning that their main chain preferably includes a polyolefin or a derivative thereof. The polyolefin polyols include at least a polyol component having an olefin skeleton. Examples of the polyol component having an olefin skeleton include polybutadiene-based polyols such as 1,2-polybutadiene polyol, 1,4-polybutadiene polyol, 1,2-polychloroprene polyol, and 1,4-polychloroprene polyol, polyisoprene-based polyols, and saturated compounds obtained by adding hydrogen or halogen atoms to the double bonds of these polyols, for example. The polyol component having an olefin skeleton may be a polyol obtained by copolymerizing a polybutadiene-based polyol, for example, with an olefin compound, such as styrene, ethylene, vinyl acetate, or acrylic ester, or a hydrogenated compound thereof. The polyol component having an olefin skeleton may have a linear or branched structure. These compounds as the polyol component having an olefin skeleton may be used alone or in combination of two or more.

The polyisocyanate component may include one or both of a hydrophilic polyisocyanate and a hydrophobic polyisocyanate. The hydrophilic polyisocyanate is a polyisocyanate having a hydrophilic unit. The hydrophobic polyisocyanate is a polyisocyanate having no hydrophilic unit. The hydrophilic polyisocyanate having a hydrophilic unit means a polyisocyanate exhibiting a higher hydrophilicity owing to a hydrophilicity-increasing functional group (hydrophilic unit) added thereto, differently from a polyisocyanate exhibiting a higher hydrophilicity owing only to an isocyanate group-derived structure such as an isocyanurate structure or a biuret structure. The polyisocyanate component containing the hydrophilic unit can prevent whitening due to moisture absorption.

Preferably, the polyisocyanate component includes both a hydrophilic polyisocyanate and a hydrophobic polyisocyanate. Including both a hydrophilic polyisocyanate and a hydrophobic polyisocyanate, the thermosetting polyurethane composition enables adjustment of the balance between hydrophilicity and hydrophobicity of the intermediate polyurethane layer 12. Use of a hydrophobic polyisocyanate alone may cause the intermediate polyurethane layer 12 to absorb moisture to suffer whitening after production of the optically clear adhesive sheet. Use of a hydrophilic polyisocyanate alone may prevent whitening due to moisture absorption, but may not allow the polyisocyanate component to sufficiently mix with the polyol component, lowering the transparency.

Preferably, the weight ratio of a curing agent containing a hydrophilic polyisocyanate to a curing agent containing a hydrophobic polyisocyanate in the thermosetting polyurethane composition is 2:1 to 1:2. With the weight ratio of the curing agent containing a hydrophilic polyisocyanate to the curing agent containing a hydrophobic polyisocyanate within the above range, the miscibility of the polyisocyanate component with the polyol component and the hygroscopicity of the intermediate polyurethane layer 12 can be adjusted, and the haze in high temperature and high humidity environments can be 1% or lower. The weight ratio range is more preferably 1:1 to 1:1.5.

Suitable as the hydrophilic unit in the hydrophilic polyisocyanate is a polyalkylene oxide unit. Examples of the polyalkylene oxide unit include a polyethylene oxide unit and a polypropylene oxide unit.

Examples of the hydrophilic unit other than the polyalkylene oxide unit include units including groups derived from a carboxylic acid, an alkali metal salt of a carboxylic acid, a sulfonic acid, or an alkali metal salt of a sulfonic acid, a hydroxy group, an amide group, or an amino group. Specific examples thereof include units derived from polyacrylic acid, an alkali metal salt of polyacrylic acid, a copolymer containing a sulfonic acid group, an alkali metal salt of a copolymer containing a sulfonic acid group, polyvinyl alcohol, polyacrylamide, carboxymethyl cellulose, an alkali metal salt of carboxymethyl cellulose, or polyvinylpyrrolidone.

Preferably, the hydrophilic polyisocyanate is a modified polyisocyanate having an ethylene oxide unit, obtained by reacting an acyclic aliphatic and/or alicyclic polyisocyanate containing an isocyanate group with an ether compound having a polyalkylene oxide unit. An acyclic aliphatic and/or alicyclic polyisocyanate can reduce the chances of coloring or discoloration and enables the optically clear adhesive sheet to exhibit long-lasting transparency with higher reliability. Also, being modified with an ether compound having a polyalkylene oxide unit, the polyisocyanate component can prevent whitening owing to its hydrophilic moiety (polyalkylene oxide unit) and can exhibit miscibility with low-polarity components such as a tackifier and a plasticizer owing to its hydrophobic moiety (the other units).

Specific examples of the modified polyisocyanate having an ethylene oxide unit include Coronate 4022, Aquanate 130, and Aquanate 140, which are available from Tosoh Corporation.

Examples of the hydrophobic polyisocyanate include isophorone diisocyanate (IPDI)-based polyisocyanates and hexamethylene diisocyanate (HDI)-based polyisocyanates. Specific examples of the isophorone diisocyanate (IPDI)-based polyisocyanates include Desmodur I available from Sumika Bayer Urethane Co., Ltd. Specific examples of the HDI-based polyisocyanates include HC-247 available from Nippon Polyurethane Industry Co., Ltd.

Preferably, the α ratio (the number of moles of OH groups derived from polyol component/the number of moles of NCO groups derived from polyisocyanate component) of the intermediate polyurethane layer 12 is 1.0 or higher and 1.8 or lower. The lower the α ratio, the more rigid the intermediate polyurethane layer 12 becomes. The higher the α ratio, the softer the intermediate polyurethane layer 12 becomes. With an α ratio of the intermediate polyurethane layer 12 of 1.0 or higher and 1.8 or lower, both prevention of delay bubble generation and flexibility of the optically clear adhesive sheet can be achieved. The upper limit of the α ratio is more preferably 1.5. An α ratio of lower than 1.0 suggests that the amount of the polyisocyanate component is excessive for the amount of the polyol component and thus the intermediate polyurethane layer becomes rigid. A rigid intermediate polyurethane layer may make it difficult to achieve the flexibility required for the optically clear adhesive sheet. An α ratio of lower than 1.0 may also lead to a failure in achieving a sufficient adhesive strength required for the optically clear adhesive sheet. An α ratio of higher than 1.8 may cause insufficient curing of the thermosetting polyurethane composition.

The thermosetting polyurethane composition may further contain a plasticizer. The plasticizer may be any compound that is used to impart flexibility to heat-cured polyurethane, and preferably contains a carboxylic acid-based plasticizer in terms of miscibility and weather resistance.

The thermosetting polyurethane composition may further contain a catalyst. The catalyst may be any catalyst used in a urethane modification reaction. Examples thereof include organotin compounds such as di-n-butyltin dilaurate, dimethyltin dilaurate, dibutyltin oxide, and tin octanoate; organotitanium compounds; organozirconium compounds; tin carboxylates; bismuth carboxylates; and amine-based catalysts such as triethylene diamine.

The thickness of the intermediate polyurethane layer 12 is 100 µm or greater and 2000 µm or smaller. Including polyurethane, the intermediate polyurethane layer 12 can be made thick and can sufficiently conform to an uneven surface due to a factor such as a bezel when the optically clear adhesive sheet is used for bonding of a touchscreen, for example. An optically clear adhesive sheet with an intermediate polyurethane layer 12 having a thickness of smaller than 100 µm may have a lower flexibility. Such an optically clear adhesive sheet, when one of its surfaces is bonded to the surface of an optical member, may not be able to conform to a rough, uneven surface of the optical member. Also, the other surface of such an optically clear adhesive sheet may not be bonded to the surface of another optical member with a sufficient adhesive strength. An intermediate adhesive layer 12 having a thickness of greater than 2000 um may fail to contribute to sufficient optical characteristics such as a haze or a total light transmittance. The lower limit of the thickness of the intermediate polyurethane layer 12 is preferably 200 µm, more preferably 250 µm, still more preferably 500 µm. The upper limit of the thickness of the intermediate polyurethane layer 12 is more preferably 1500 µm, still more preferably 1000 µm.

The optically clear adhesive sheet 10 includes the first surface-adhesive layer 11, the intermediate polyurethane layer 12, and the second surface-adhesive layer 13 in this order. The first surface-adhesive layer 11 and the second surface-adhesive layer 13 each are located on an outermost surface (the surface to be in contact with an adherend) of the optically clear adhesive sheet 10. The optically clear adhesive sheet 10 may further include other layer(s), but preferably has a three-layer structure consisting of the first surface-adhesive layer 11, the intermediate polyurethane layer 12, and the second surface-adhesive layer 13. In other words, the first surface-adhesive layer 11 and the intermediate polyurethane layer 12 are preferably in contact with each other, and the second surface-adhesive layer 13 and the intermediate polyurethane layer 12 are preferably in contact with each other.

The thermosetting polyurethane composition may contain, as needed, various additives such as a tackifier (adhesion-imparting agent), a stabilizer, an antioxidant, an antibacterial agent, and a flame retardant, as long as they do not deteriorate the properties required for the optically clear adhesive sheet.

The thermosetting polyurethane composition may also contain an ultraviolet absorber as long as it does not deteriorate the properties required for the optically clear adhesive sheet. However, an examination made by the present inventor revealed that adding an ultraviolet absorber to the intermediate polyurethane layer 12 does not achieve the effect of preventing melting of the intermediate polyurethane layer 12 in high temperature and ultraviolet irradiation environments. In addition, the addition of an ultraviolet absorber may possibly not lower the haze of the optically clear adhesive sheet. Thus, the thermosetting polyurethane composition preferably does not contain an ultraviolet absorber.

### <Optically clear adhesive sheet>

The loss tangent of the optically clear adhesive sheet 10 at 85°C is 0.25 or more and 0.6 or less. The loss tangent (tan δ) is defined as the ratio between the elasticity (storage modulus) and viscosity (loss modulus) of a material (tan δ = loss modulus/storage modulus). When the loss tangent of the optically clear adhesive sheet 10 is low, i.e., when the optically clear adhesive sheet 10 is close to an elastic body (rigid body), the optically clear adhesive sheet 10 is less likely to be deformed by external force to better prevent delay bubbles, while being less capable of conforming to the shape of the adherend. When the loss tangent of the optically clear adhesive sheet 10 is high, i.e., when the optically clear adhesive sheet 10 is close to a viscous body, the optically clear adhesive sheet 10 has a lower effect of preventing delay bubbles, though exhibiting higher capability to conform to an uneven surface. Thus, the loss tangent of the optically clear adhesive sheet 10 at 85°C is set to 0.25 or more and 0.6 or less, so that the optically clear adhesive sheet 10 can achieve both excellent capability to conform to an uneven surface and excellent effect of preventing delay bubbles in a high temperature environment at 85°C. The loss tangent of the optically clear adhesive sheet 10 at 85°C can be controlled by adjusting the α ratio (the number of moles of OH groups derived from polyol component/the number of moles of NCO groups derived from polyisocyanate component) of the intermediate polyurethane layer described below.

The loss tangent can be measured with a viscoelasticity measuring device "Physica MCR302" available from Anton Paar Germany GmbH. The measurement can be performed using a measuring plate PP12 under the measuring conditions including a strain of 0.1%, a frequency of 1 Hz, and a cell temperature of 25°C to 100°C (temperature rise rate: 3°C/min).

Preferably, the haze of the optically clear adhesive sheet 10 is 1% or lower in a high temperature and high humidity environment with a temperature of 85°C and a humidity of 85%. The haze can be measured with, for example, a turbidity meter "Haze Meter NDH5000" available from Nippon Denshoku Industries Co., Ltd. The haze is measured by a process in conformity with JIS K 7136. The haze can be adjusted by the polyisocyanate component described above. Polyurethane tends to absorb moisture more when left in a high temperature and high humidity environment than when left at room temperature. Since moisture does not mix with organic substances in polyurethane, moisture absorption by the intermediate polyurethane layer possibly causes an increase in haze of the optically clear adhesive sheet 10. The haze in a high temperature and high humidity environment therefore tends to be higher than the haze at room temperature. Nevertheless, the optically clear adhesive sheet 10 of the present invention can exhibit a haze of 1% or lower also in a high temperature and high humidity environment.

Preferably, the total light transmittance of the optically clear adhesive sheet 10 is 90% or higher. The total light transmittance can be measured, for example, with a turbidity meter "Haze Meter NDH5000" available from Nippon Denshoku Industries Co., Ltd. The total light transmittance is measured by a process in conformity with JIS K 7361-1.

Preferably, the thickness (total thickness) of the optically clear adhesive sheet 10 of the present invention is 120 to 2200 um. An optically clear adhesive sheet 10 having a thickness of smaller than 120 µm may have a lower flexibility. Such an optically clear adhesive sheet, when one of its surfaces is bonded to the surface of an optical member, may not be able to cover a rough, uneven surface of the optical member. Also, the other surface of such an optically clear adhesive sheet may not be bonded to another optical member with a sufficient adhesive strength. An optically clear adhesive sheet 10 having a thickness of greater than 2200 µm may fail to achieve sufficient optical characteristics such as a haze or a total light transmittance. The lower limit of the thickness of the optically clear adhesive sheet 10 is more preferably 300 µm. The upper limit thereof is more preferably 700 µm.

### <Production method of optically clear adhesive sheet>

Any method may be employed to laminate the first surface-adhesive layer 11, the intermediate polyurethane layer 12, and the second surface-adhesive layer 13 in this order. For example, a method may be employed that forms the first surface-adhesive layer 11, the intermediate polyurethane layer 12, and the second surface-adhesive layer 13 separately and then bonds these layers together.

Any method may be employed to produce the first surface-adhesive layer 11 and the second surface-adhesive layer 13. For example, a general film-forming treatment may be employed that includes forming a film of an acrylic resin composition with a general film-forming machine such as any of various coating machines, a bar coater, or a doctor blade. Also, the first surface-adhesive layer 11 and the second surface-adhesive layer 13 may each be produced by centrifugal molding.

Any method may be employed to produce the intermediate polyurethane layer 12. For example, when the intermediate polyurethane layer 12 is a cured product of a thermosetting polyurethane composition, preferably, the method includes preparing the thermosetting polyurethane composition through mixing with stirring a polyol component, a polyisocyanate component, and a hindered amine-based light stabilizer; and curing the thermosetting polyurethane composition. The thermosetting polyurethane composition may further contain a tackifier.

The following shows a specific example of the production method when the intermediate polyurethane layer 12 is a cured product of a thermosetting polyurethane composition. First, a polyol component, a polyisocyanate component, a hindered amine-based light stabilizer, and, as needed, other components such as a catalyst are mixed with stirring using a mixer, for example, so that a liquid or gel thermosetting polyurethane composition is obtained. In the case where the composition is to contain a tackifier, a masterbatch is prepared in advance by adding the tackifier to the polyol component and dissolving the tackifier by stirring while heating, so that the masterbatch is mixed with the other components. The thermosetting polyurethane composition is then immediately fed into a molding machine such that the thermosetting polyurethane composition is cured (crosslinked) while being transported in the state of being sandwiched between first and second release liners. Thereby, the thermosetting polyurethane composition is semi-cured into a sheet integrated with the first and second release liners. The sheet is then crosslinked in a furnace for a given period of time, whereby the intermediate polyurethane layer 12 is obtained.

### [Laminate]

The optically clear adhesive sheet of the present invention may have a release liner on each surface. FIG. 2 is a schematic cross-sectional view of an exemplary laminate of the present invention. A laminate 20 including the optically clear adhesive sheet 10 of the present invention, a first release liner 21 covering one surface of the optically clear adhesive sheet 10, and a second release liner 22 covering the other surface of the optically clear adhesive sheet 10 (hereinafter, also referred to as a "laminate of the present invention") is also one aspect of the present invention. In the laminate of the present invention, the first release liner and the second release liner can protect both surfaces of the optically clear adhesive sheet of the present invention until immediately before being bonded to an adherend. The release liners therefore prevent deterioration of adhesion and sticking of foreign matters to the optically clear adhesive sheet of the present invention. Also, the release liners can prevent the surfaces of the optically clear adhesive sheet of the present invention from being bonded to something other than the adherend, improving the handleability of the optically clear adhesive sheet.

The first release liner and the second release liner can each be, for example, a PET film. The materials and the thicknesses of the first release liner and the second release liner may be the same as or different from each other.

The bonding strength (peel strength) between the optically clear adhesive sheet of the present invention and the first release liner and the bonding strength (peel strength) between the optically clear adhesive sheet of the present invention and the second release liner are preferably different from each other. Such a difference in bonding strength makes it easy to peel one of the first release liner and the second release liner (release liner with lower bonding strength) alone from the laminate of the present invention and bond the exposed first surface of the optically clear adhesive sheet and a first adherend to each other, followed by peeling the other of the first release liner and the second release liner (release liner with higher bonding strength) and then bonding the exposed second surface of the optically clear adhesive sheet and a second adherend to each other.

Easy-peel treatment (release treatment) may be conducted on one or both of the surface of the first release liner coming into contact with the optically clear adhesive sheet of the present invention and the surface of the second release liner coming into contact with the optically clear adhesive sheet of the present invention. Examples of the easy-peel treatment include siliconizing.

### [Bonded structure]

A bonded structure with a first adherend, a second adherend, and the optically clear adhesive sheet of the present invention bonding the first adherend and the second adherend to each other (hereinafter, also referred to as "the bonded structure of the present invention") is also one aspect of the present invention.

The bonded structure of the present invention may be used in any application and may include a liquid crystal module and a cover panel bonded by an optically clear adhesive sheet. The optically clear adhesive sheet is used to bond the liquid crystal module and the cover panel to eliminate the air layer between the liquid crystal module and the cover panel. This can improve the viewability of the liquid crystal module. When the liquid crystal module is placed inside a housing (bezel) with an opening in the display area, the bezel is positioned on the outer edge of the liquid crystal module. This forms an uneven surface due to the thickness of the bezel. A method of bonding the liquid crystal module and the cover panel with the optically clear adhesive sheet overlaid not only with the center of the liquid crystal module but also with the area where the bezel is positioned is also called "bezel-on bonding". A bonded configuration formed by the bezel-on bonding is also referred to as a "bezel-on-bonded configuration".

The optically clear adhesive sheet used in the present invention is suitable for bezel-on bonding as it is flexible and can be made thick. The bonded structure of the present invention may have a bezel-on-bonded configuration. For example, the bonded structure of the present invention may have a configuration in which the optically clear adhesive sheet and a support member are sandwiched between the first adherend and the second adherend, the support member has an uneven-surface formation portion on the outer edge of the first adherend, and the optically clear adhesive sheet includes a thick film portion bonding the first adherend and the second adherend and an edge portion sandwiched between the uneven-surface formation portion and the second adherend. The resin substrate may be the first adherend or the second adherend.

FIG. 3 is a cross-sectional view schematically showing the configuration of the bonded structure of the present invention having a bezel-on bonded configuration. A bonded structure 50 shown in FIG. 3 includes the optically clear adhesive sheet 10 and an upper bezel (support member) 41 between a first adherend 51 and a second adherend 52, and may be part of an electronic device such as a display device. The upper bezel 41 is integrated with a lower bezel 42 to form a housing (bezel) that houses the first adherend 51.

In the bonded structure 50, the optically clear adhesive sheet 10 includes a thick film portion 11A bonding the first adherend 51 and the second adherend 52 and an edge portion 11B sandwiched between the uneven-surface formation portion of the upper bezel 41 and the second adherend 52 (see FIG. 3). Since being sandwiched between the second adherend 52 and the uneven-surface formation portion of the upper bezel 41, the edge portion of the optically clear adhesive sheet 10 is less likely to peel off. Also, since the optically clear adhesive sheet 10 reaches the uneven-surface formation portion of the upper bezel 41, the top surface of the first adherend 51 is entirely covered by the uneven-surface formation portion of the upper bezel 41 or the optically clear adhesive sheet 10. This prevents moisture absorption by the first adherend 51. When a polarizer is positioned on the top surface of the first adherend 51, moisture absorption by the polarizer can be prevented. Moisture absorption by the polarizer may accelerate performance deterioration and/or cause delay bubbles due to evaporation of the absorbed moisture in high temperature environments.

The combination of the first adherend 51 and the second adherend 52 is not limited. For example, the first adherend 51 and the second adherend 52 may each be any of various members that constitute a display device, such as a display panel, a touchscreen (glass substrate with ITO transparent conductive film), or a cover panel (cover glass). The first adherend 51 may be a display panel or a touchscreen while the second adherend 52 may be a cover panel. Also, the first adherend 51 may be a display panel while the second adherend 52 may be a touchscreen.

The display panel may be of any type and may be, for example, a liquid crystal panel or an organic electroluminescent panel (organic EL panel). A polarizer or a retardation film, for example, may be placed on the surface of the display panel to which the optically clear adhesive sheet 10 is to be bonded. Bonding the members of a display device with the optically clear adhesive sheets 10 can eliminate air layers (air gaps) in the display device to improve the viewability of the display screen. When a polarizer is placed, the optically clear adhesive sheet 10 can effectively prevent the polarizer from absorbing moisture.

The upper bezel 41 is a frame-shaped member placed around the optically clear adhesive sheet 10 in a plan view, with at least a portion of the upper bezel 41 positioned on the outer edge of the first adherend 51. The side surface of the portion (uneven-surface formation portion) on the outer edge of the first adherend 51 forms an uneven surface. The shape of the side surface of the uneven-surface formation portion is not limited, and the side surface of the uneven-surface formation portion may be perpendicular to the top surface of the first adherend 51. When the first adherend 51 is a display panel, the upper bezel 41 is positioned in the frame area of the display device. In this case, a light-shielding portion 52A may be provided on the outer edge of the first adherend 51 such that the upper bezel 41 is not perceived by the user of the display device. The light-shielding portion 52A may be provided on the outer edge of the second adherend 52. The material of the upper bezel 41 is not limited and may be, for example, metal or resin.

The thickness (uneven-surface size) of the upper bezel 41 is not limited and is 200 to 1000 um, for example. A thickness of the upper bezel 41 of greater than 200 µm requires the thickness of the optically clear adhesive sheet 10 to be 300 µm (0.3 mm) or greater, meaning that an optically clear adhesive sheet thicker than a normal optically clear adhesive sheet is used.

The thickness of the thick film portion of the optically clear adhesive sheet 10 is 1.5 times or more, more preferably twice or more, the thickness of the uneven-surface formation portion of the upper bezel 41. This can make the optically clear adhesive sheet 10 sandwiched between the uneven-surface formation portion of the upper bezel 41 and the second adherend 52 sufficiently thick at the end portion, preventing peeling of the end portion. The thickness of the thick film portion of the optically clear adhesive sheet 10 in the bonded structure 50 is substantially the same as the thickness of the optically clear adhesive sheet 10 before bonding. In other words, the thickness of the optically clear adhesive sheet 10 before bonding is preferably 1.5 times or more, more preferably twice or more, the thickness of the upper bezel 41.

### EXAMPLES

The present invention is described in more detail below based on examples. The examples, however, are not intended to limit the scope of the present invention.

### (Materials)

Materials used to prepare a thermosetting polyurethane composition in the following examples and comparative examples are listed below.

### (A) Polyol component

Polyolefin polyol ("EPOL^{®}" available from Idemitsu Kosan Co., Ltd.,)

### (B) Polyisocyanate component

### (B-1) Hydrophilic polyisocyanate

Modified polyisocyanate having ethylene oxide unit ("Coronate 4022" available from Tosoh Corporation)

### (B-2) Hydrophobic polyisocyanate

Isophorone diisocyanate (IPDI)-based polyisocyanate ("Desmodur I" available from Sumika Bayer Urethane Co., Ltd.)

### (C) Hindered amine-based light stabilizer (HALS)

HALS-1: "ADK STAB LA-81" available from ADEKA Corporation
HALS-2: "ADK STAB LA-63P" available from ADEKA Corporation
HALS-3: "ADK STAB LA-72" available from ADEKA Corporation

### (D) Ultraviolet absorber

Benzotriazole-based ultraviolet absorber ("ADK STAB LA-36" available from ADEKA Corporation)

### (E) Tackifier

"I-MARV P-100" available from Idemitsu Kosan Co., Ltd.

### (F) Catalyst

Dimethyltin dilaurate ("Fomrez catalyst UL-28" available from Momentive)

### (Example 1)

### <Intermediate polyurethane layer>

As shown in Table 1 below, 100 parts by weight of the polyol component, 4.7 parts by weight of the hydrophilic polyisocyanate, 4.7 parts by weight of the hydrophobic polyisocyanate, 0.45 parts by weight of ADK STAB LA-81 as the hindered amine-based light stabilizer, 10 parts by weight of the tackifier, and 0.01 parts by weight of the catalyst were mixed with stirring using an oscillating model agitator. Thereby, a thermosetting polyurethane composition having an α ratio of 1.5 was prepared. In the thermosetting polyurethane composition, the mixing ratio (weight ratio) of the hydrophilic polyisocyanate (B-1) to the hydrophobic polyisocyanate (B-2) was B-1:B-2 = 1:1.

The "Coronate 4022" available from Tosoh Corporation is a product obtainable by reacting an ether polyol having three or more ethylene oxide units per molecule on average with polyisocyanate synthesized from starting materials of a hexamethylene diisocyanate and/or a hexamethylene diisocyanate monomer.

The resulting thermosetting polyurethane composition was crosslinked and cured at a furnace temperature of 50°C to 90°C for a furnace time of several minutes while being transported in the state of being sandwiched between paired release liners (PET films with release-treated surfaces), and thereby a sheet with the release liners was obtained. The sheet was crosslinked in a heating machine for 10 to 15 hours, so that a heat-cured polyurethane layer (intermediate polyurethane layer) having the release liner on each surface was produced.

### <First and second surface-adhesive layers>

An acrylic resin composition was prepared by adding 0.6 parts by weight of an isocyanate-based curing agent ("DY-70" available from Soken Chemical & Engineering Co., Ltd.) to an acrylic resin (a blend of "SK1838" and "SK1875" available from Soken Chemical & Engineering Co., Ltd. at a solids ratio of 5:5). The acrylic resin composition was then applied to a release liner using a comma coater and was dried in a drying furnace at 80°C to 120°C. Then, the surface with the acrylic resin composition was attached to another release liner. The workpiece was heated at 40°C for one week to be cured. In this procedure, acrylic adhesive layers were produced. The thickness of each acrylic adhesive layer was 25 *µ*m.

### <Laminate>

Two release-liner-including acrylic adhesive layers and one release-liner-including heat-cured polyurethane layer (intermediate polyurethane layer) were prepared. These layers were laminated by peeling one of the release liners from each of the two release-liner-including acrylic adhesive layers and attaching the exposed surfaces of the two release-liner-including acrylic adhesive layers to the respective surfaces of the intermediate polyurethane layer. Thereby, an optically clear adhesive sheet of Example 1 including a first surface-adhesive layer, an intermediate polyurethane layer, and a second surface-adhesive layer in this order and a laminate of Example 1 including an optically clear adhesive sheet with a release liner on each surface were produced.

### (Example 2)

An optically clear adhesive sheet and a laminate of Example 2 were produced as in Example 1, except that 0.3 parts by weight of ADK STAB LA-63P was added as the hindered amine-based light stabilizer.

### (Example 3)

An optically clear adhesive sheet and a laminate of Example 3 were produced as in Example 1, except that 0.3 parts by weight of ADK STAB LA-72 was added as the hindered amine-based light stabilizer.

### (Comparative Example 1)

An optically clear adhesive sheet and a laminate of Comparative Example 1 were produced as in Example 1, except that no hindered amine-based light stabilizer was added.

### (Comparative Example 2)

An optically clear adhesive sheet and a laminate of Comparative Example 2 were produced as in Example 1, except that an ultraviolet absorber was added instead of the hindered amine-based light stabilizer.

### (Comparative Example 3)

A heat-cured polyurethane layer (intermediate polyurethane layer) with a release liner on each surface produced as in Example 1 was used as an optically clear adhesive sheet of Comparative Example 3.

### (Comparative Example 4)

An optically clear adhesive sheet and a laminate of Comparative Example 4 were produced as in Comparative Example 1, except that the α ratio of the thermosetting polyurethane composition was changed as shown in Table 1 below and the loss tangent at 85°C was changed to 0.7.

The optically clear adhesive sheets of the examples and the comparative examples were evaluated by the following methods. The results are summarized in Table 1 below.

### <Loss tangent at 85°C>

The optically clear adhesive sheets of Examples 1 to 3 and Comparative Examples 1 to 4, each having a size of 20 mm (length) × 20 mm (width), each were subjected to measurement of loss tangent with a viscoelasticity measuring device "Physica MCR302" available from Anton Paar Germany GmbH. The loss tangent at 85°C was measured using a measuring plate PP12 under the measuring conditions including a strain of 0.1%, a frequency of 1 Hz, and a cell temperature of 25°C to 100°C (temperature rise rate: 3°C/min).

### <Effect of preventing delay bubbles>

One of the release liners of each of the laminates produced in Examples 1 to 3 and Comparative Examples 1 to 4 was peeled off to bond the exposed surface of the optically clear adhesive sheet to a transparent glass substrate (soda glass available from Matsunami Glass Ind., Ltd.) at a pressing pressure of 0.15 MPa in a vacuum. Next, the other release liner was peeled off to bond the exposed other surface of the optically clear adhesive sheet to a 1-mm-thick polycarbonate substrate ("Resin Sheet PCTSH" available from MISUMI Group Inc.) at a pressing pressure of 0.15 MPa in a vacuum. Thereby, bonded structures of a polycarbonate substrate and a glass substrate bonded with the respective optically clear adhesive sheets were obtained.

Each of the resulting bonded structures was a rectangular test piece with a diagonal length of 7 inches, and was left in a high temperature and high humidity environment with a temperature of 85°C and a humidity of 85% for 1000 hours. Thereafter, each test sample was visually observed to check whether or not air bubbles (delay bubbles) were generated at the adhesive interface between the glass substrate and the optically clear adhesive sheet and at the adhesive interface between the polycarbonate substrate and the optically clear adhesive sheet. A bonded structure with no air bubbles was evaluated as "Good", a bonded structure with practically acceptable air bubbles was evaluated as "Average", and a bonded structure with practically unacceptable air bubbles was evaluated as "Poor". Table 1 shows the results.

### <Weather resistance test>

The optically clear adhesive sheets of Examples 1 to 3 and Comparative Examples 1 to 4 were tested using a weather resistance tester (weatherometer) with a metal weather (metal halide lamp) as the light source at a temperature of 83°C for one week. Thereafter, each optically clear adhesive sheet was taken out and visually checked. An optically clear adhesive sheet with no deformation (melting) was evaluated as "Good", and an optically clear adhesive sheet with any deformation was evaluated as "Poor".

### <Capability to conform to uneven surface>

As shown in FIG. 3, the laminate including the lower bezel 42, the glass substrate (first adherend 51), and the upper bezel 41 was bonded to one surface of each of the optically clear adhesive sheets of Examples 1 to 3 and Comparative Examples 1 to 4 and the polycarbonate substrate (second adherend 52) was bonded to the other surface of the optically clear adhesive sheet, each at a pressing pressure of 0.1 MPa for 15 seconds in a vacuum. Thereby, bonded structures were obtained.

The bonded structures fabricated in the examples and comparative examples are described below (see FIG. 3). The upper bezel 41 had an uneven surface with a height H1 of 0.8 mm. The width W1 of the opening in the upper bezel 41 was 264.4 mm. The light-shielding portion 52A with a thickness T1 of 0.03 mm and a width W2 of 40.0 mm was formed on the outer edge of the second adherend 52. The width W3 of the opening in the second adherend 52 (the portion where the light-shielding portion 52A is not provided) was 260.4 mm. The light-shielding portion 52A was formed such that its width overlapping the upper bezel 41 was 38.0 mm and its width overlapping the optically clear adhesive sheet 10 was 2.0 mm. The thickness of the thick film portion 11A of the optically clear adhesive sheet 10 in FIG. 3 corresponds to the total thickness of the optically clear adhesive sheet 10.

Each bonded structure was left in an environment with a temperature of 85°C and a humidity of 85% for one day, and then visually checked for the level of detachment of the optically clear adhesive sheet. A bonded structure with no detachment of the optically clear adhesive sheet around the upper bezel was evaluated as "Good", and a bonded structure with a few detached points but acceptable as a product was evaluated as "Average".

### <Haze measurement in high temperature and high humidity environment>

The optically clear adhesive sheets of Examples 1 to 3 and Comparative Examples 1 to 4 were left in a test chamber set at a humidity of 85% and a temperature of 85°C for 1000 hours, and then the haze was measured in a room temperature environment. The haze was measured using a turbidity meter "Haze Meter NDH5000" available from Nippon Denshoku Industries Co., Ltd.

The following Table 1 summarizes the evaluation results of the loss tangent at 85°C, effect of preventing delay bubbles, weather resistance test, capability to conform to an uneven surface, and haze in a high temperature and high humidity environment of the optically clear adhesive sheets of Examples 1 to 3 and Comparative Examples 1 to 4.

**[Table 1]**

| | | | Example 1 | Example 2 | Example 3 | Comparative Example 1 | Comparative Example 2 | Comparative Example 3 | Comparative Example 4 |
|---|---|---|---|---|---|---|---|---|---|
| Structure of intermediate polyurethane layer | (A) Polyol component | | 100 | 100 | 100 | 100 | 100 | 100 | 100 |
| | (B-1) Hydrophilic polyisocyanate | | 4.7 | 4.7 | 4.7 | 4.7 | 4.7 | 4.7 | 4.2 |
| | (B-2) Hydrophobic polyisocyanate | | 4.7 | 4.7 | 4.7 | 4.7 | 4.7 | 4.7 | 4.2 |
| | (C) Hindered amine-based light stabilizer | HALS-1 | 0.45 | | | | | 0.45 | |
| | | HALS-2 | | 0.3 | | | | | |
| | | HALS-3 | | | 0.3 | | | | |
| | (D) Ultraviolet absorber | | | | | | 0.45 | | |
| | (E) Tackifier | | 10 | 10 | 10 | 10 | 10 | 10 | 10 |
| | (F) Catalyst | | 0.01 | 0.01 | 0.01 | 0.01 | 0.01 | 0.01 | 0.01 |
| | B-1:B-2 (weight ratio) | | 1:1 | 1:1 | 1:1 | 1:1 | 1:1 | 1:1 | 1:1 |
| | α ratio of intermediate polyurethane layer | | 1.5 | 1.5 | 1.5 | 1.5 | 1.5 | 1.5 | 1.6 |
| Thickness of each layer | Intermediate polyurethane layer (µm) | | 1000 | 1000 | 1000 | 1000 | 1000 | 1000 | 1000 |
| | First surface-adhesive layer (µm) | | 25 | 25 | 25 | 25 | 25 | None | 25 |
| | Second surface-adhesive layer (µm) | | 25 | 25 | 25 | 25 | 25 | None | 25 |
| Evaluation test | Loss tangent at 85°C (tan δ) | | 0.4 | 0.4 | 0.4 | 0.4 | 0.4 | 0.4 | 0.7 |
| | Effect of preventing delay bubbles | | Good | Good | Good | Good | Good | Average | Poor |
| | Whether resistance test | | Good | Good | Good | Poor | Poor | Good | Poor |
| | Capability to conform to uneven surface | | Average | Average | Average | Average | Average | Average | Good |
| | Haze in high temperature and high humidity environment | | 1.0% or lower | 1.0% or lower | 1.0% or lower | 1.0% or lower | 1.0% or lower | 1.0% or lower | 1.0% or lower |

The results in Table 1 show that in Examples 1 to 3 where a hindered amine-based light stabilizer was added to the intermediate polyurethane layer, the delay bubble generation was prevented and the optically clear adhesive sheet did not melt in the weather resistance test. Furthermore, the haze in a high temperature and high humidity environment was 1% or lower. In contrast, in Comparative Example 1 where no hindered amine-based light stabilizer was added to the intermediate polyurethane layer and in Comparative Example 2 where an ultraviolet absorber was added to the intermediate polyurethane layer, deformation (melting) was observed in the weather resistance test. In Comparative Example 3 where the first and second surface-adhesive layers were not provided on the surfaces of the intermediate polyurethane layer, the delay bubble prevention effect was lower than that in Example 1. With a focus on the capability to conform to an uneven surface and the delay bubble prevention effect, in Comparative Example 4, the loss tangent at 85°C was set to 0.7, which improved the capability to conform to an uneven surface as compared to Example 1, but failed to sufficiently prevent the delay bubble generation.

### REFERENCE SIGNS LIST

10: Optically clear adhesive sheet
11: First surface-adhesive layer
11A: Thick film portion
11B: Edge portion
12: Intermediate polyurethane layer
13: Second surface-adhesive layer
20: Laminate
21: First release liner
22: Second release liner
31: Glass slide
32: PET sheet
41: Upper bezel (support member)
42: Lower bezel
50: Bonded structure
51: First adherend
52: Second adherend
52A: Light-shielding portion

## Claims

1. An optically clear adhesive sheet comprising, in the following order:
a first surface-adhesive layer;
an intermediate polyurethane layer; and
a second surface-adhesive layer,
the intermediate polyurethane layer containing a hindered amine-based light stabilizer,
the optically clear adhesive sheet having a loss tangent at 85°C of 0.25 or more and 0.6 or less,
the intermediate polyurethane layer having a thickness of 100 µm or greater and 2000 µm or smaller.

2. The optically clear adhesive sheet according to claim 1,
wherein the intermediate polyurethane layer is a cured product of a thermosetting polyurethane composition that contains a polyol component and a polyisocyanate component.

3. The optically clear adhesive sheet according to claim 2,
wherein the hindered amine-based light stabilizer is contained in an amount of 0.1 parts by weight or more and 1 part by weight or less relative to 100 parts by weight of the polyol component.

4. The optically clear adhesive sheet according to claim 2 or 3,
wherein an α ratio (the number of moles of OH groups derived from polyol component/the number of moles of NCO groups derived from polyisocyanate component) of the intermediate polyurethane layer is 1.0 or higher and 1.8 or lower.

5. The optically clear adhesive sheet according to any one of claims 2 to 4,
wherein the polyisocyanate component includes a hydrophilic polyisocyanate and a hydrophobic polyisocyanate.

6. A laminate comprising:
the optically clear adhesive sheet according to any one of claims 1 to 5;
a first release liner covering one surface of the optically clear adhesive sheet; and
a second release liner covering the other surface of the optically clear adhesive sheet.

7. A bonded structure comprising:
a first adherend;
a second adherend; and
the optically clear adhesive sheet according to any one of claims 1 to 5 bonding the first adherend and the second adherend to each other.
